# EUROPEAN PATENT APPLICATION

(11) **EP 2 062 799 A2**
(43) Date of publication of application: **27.05.2009**
(21) Application number: 08165161.4
(22) Date of filing: 25.09.2008
(51) Int. Cl.: B62D 1/06

(54) **Steering wheel core metal, steering wheel, and steering apparatus**

(30) Priority: 22.11.2007 JP 2007303602
(71) Applicant: TAKATA CORPORATION, Tokyo 106-8510 (JP)
(72) Inventor: Sato, Takeshi, Tokyo Tokyo 106-8510 (JP)
(74) Representative: Vossius & Partner

(57) **Abstract**

An effective technique is provided for reducing the weight of a steering wheel core metal of a steering wheel installed in a vehicle and used for steering the vehicle, without reducing the rigidity of the steering wheel core metal. In a steering wheel (101) installed in a vehicle and used for steering the vehicle, a circular portion of a steering wheel core metal is formed by superimposing a first half (104a) made of metal on a second half (105a) made of resin. A plurality of extending pieces (107) that extend so as to intersect with the plane in which the steering wheel core metal (102) extends are provided in the region defined by the first half (104a) and the second half (105a), and the profile of the plurality of extending pieces (107) corresponds to the inner curved surfaces of the first half (104a) and the second half (105a).

## Description

The present invention relates to a technique to construct a steering wheel installed in a vehicle and used for steering the vehicle.

For example, JP-A-2000-211529 (Patent Document 1) discloses the structure of a steering wheel for steering a vehicle. The steering wheel described in Patent Document 1 has a steering wheel core metal made of a metal material and having a circular portion. The steering wheel core metal is formed by superimposing an upper shell on a lower shell.
The upper shell and the lower shell are made of a metal material and each have a portion having a semicircular cross section. When this kind of steering wheel is designed, it is necessary to reduce the weight without reducing the rigidity of the steering wheel core metal.

The present invention is made in view of the above. An object of the present invention is to provide an effective technique for reducing the weight of a steering wheel core metal of a steering wheel installed in a vehicle and used for steering the vehicle, without reducing the rigidity of the steering wheel core metal.

The present invention is made to solve the above-described problems. The present invention can be applied to a technique to construct a steering wheel installed in a vehicle such as an automobile, a bus, a taxi, a ship, or a train and used for steering the vehicle.

A steering wheel core metal according to the present invention is a core metal portion forming a wheel framework of a steering wheel for steering a vehicle. That is, this steering wheel core metal is formed of a metal material, provided in a core portion of a steering wheel, and serves as a framework portion ensuring the strength of the steering wheel. This steering wheel core metal can also be called "steering wheel framework" or "steering wheel core material" constituting the steering wheel. This steering wheel core metal has at least a boss portion, a circular portion, and a spoke portion. At the boss portion, the steering wheel core metal is connected to a steering shaft. The circular portion is circular and has a tubular cross section. The spoke portion connects the boss portion and the circular portion.

The circular portion is formed by superimposing a first half on a second half. The first half is circular and has a semicircular cross section, and is made of metal. The second half is circular and has a semicircular cross section, and is made of resin. The first half and the second half typically have a semicircular, semielliptical, substantially C-shaped, or substantially U-shaped cross section. A plurality of extending pieces that extend so as to intersect with the plane in which the steering wheel core metal extends are provided in the region defined by the first half and the second half. The profile of the plurality of extending pieces corresponds to the inner curved surfaces of the first half and the second half. The term "so as to intersect" referred to here means to extend in a direction intersecting with the plane in which the steering wheel core metal extends, that is, the plane in which the circular first and second halves extend, and typically to extend in a direction perpendicular to the plane in which the steering wheel core metal extends. The plurality of extending pieces provided in the region defined by the first half and the second half may be integral with one of the first and second halves or separate from the first and second halves.

Such a structure of the steering wheel core metal according to the present invention can reduce the weight without reducing the rigidity. That is, forming the second half of a resin material can reduce the weight of the whole steering wheel core metal, compared to the case where both the first and second halves are formed of a metal material. On the other hand, since the plurality of extending pieces that extend so as to intersect with the plane in which the steering wheel core metal extends are provided in the space region defined by the first half and the second half, the plurality of extending pieces function as reinforcing ribs that reinforce the steering wheel core metal. Therefore, in spite of the second half formed of a resin material, the strength of the whole steering wheel can be prevented from being reduced. In addition, since the profile of the plurality of extending pieces corresponds to the inner curved surfaces of the first half and the second half, the space region defined by the first half and the second half is filled by the extending pieces, and thereby the shape of the whole steering wheel can be maintained.

In the steering wheel core metal according to the present invention, the first half is preferably integral with the extending pieces. The term "integral" referred to here includes an embodiment in which the plurality of extending pieces are formed on the inner curved surface of the first half when the first half is formed, and an embodiment in which the plurality of extending pieces are joined to the inner curved surface of the first half after the first half is formed. Such a structure can reduce the number of components and the production cost of the steering wheel core metal.

A steering wheel according to the present invention includes at least a steering wheel core metal forming a wheel framework of the steering wheel, and a covering portion made of resin that covers the periphery of the steering wheel core metal. The steering wheel core metal of this steering wheel has the same structure as the above-described steering wheel core metal. Thus, a steering wheel in which the weight of a steering wheel core metal can be reduced without reducing the rigidity of the steering wheel core metal, is provided. In addition, the shape of the whole steering wheel can be maintained.

In the steering wheel according to the present invention, the first half is preferably integral with the extending pieces. Such a structure provides a steering wheel in which the number of components and the production cost of the steering wheel core metal can be reduced.

The steering wheel according to the present invention may include a covering member made of resin that covers the boss portion. The second half is an extension of this covering member toward the circular portion. Such a structure enables the second half to serve both as a member that constitutes the circular portion and as a member that covers the boss portion.

A steering apparatus according to the present invention includes at least the above-described steering wheel and an airbag module. The airbag module is disposed in the profile of the steering wheel and restrains an occupant of the vehicle with an airbag that develops and inflates in an occupant restraining region at the time of a vehicle collision. Such a structure provides a steering apparatus including a steering wheel in which the weight of the steering wheel core metal can be reduced without reducing the rigidity.

As described above, according to the present invention, in a steering wheel for steering a vehicle, a circular portion of a steering wheel core metal is formed by superimposing a first half made of metal on a second half made of resin. A plurality of extending pieces that extend so as to intersect with the plane in which the steering wheel core metal extends are provided in the region defined by the first half and the second half, and the profile of the plurality of extending pieces corresponds to the inner curved surfaces of the first half and the second half. Since the second half is made of resin, the weight can be reduced. Since the profile of the plurality of extending pieces corresponds to the inner curved surfaces of the first half and the second half, the rigidity can be improved. Thus, the weight of the steering wheel core metal can be reduced without reducing the rigidity.

A steering apparatus 100, an embodiment of "steering apparatus" in the present invention will now be described with reference to the drawings.
FIG. 1 is a plan view of the steering apparatus 100 of this embodiment;
FIG. 2 is an exploded perspective view of the steering wheel 101 in FIG. 1;
FIG. 3 shows the exploded cross section structure of the steering wheel 101 in FIG. 1;
FIG. 4 shows the cross section structure of the circular portion 102a of the steering wheel core metal 102 of this embodiment; and
FIG. 5 is a perspective view of a first half 104a constituting the circular portion 102a in FIG. 4.

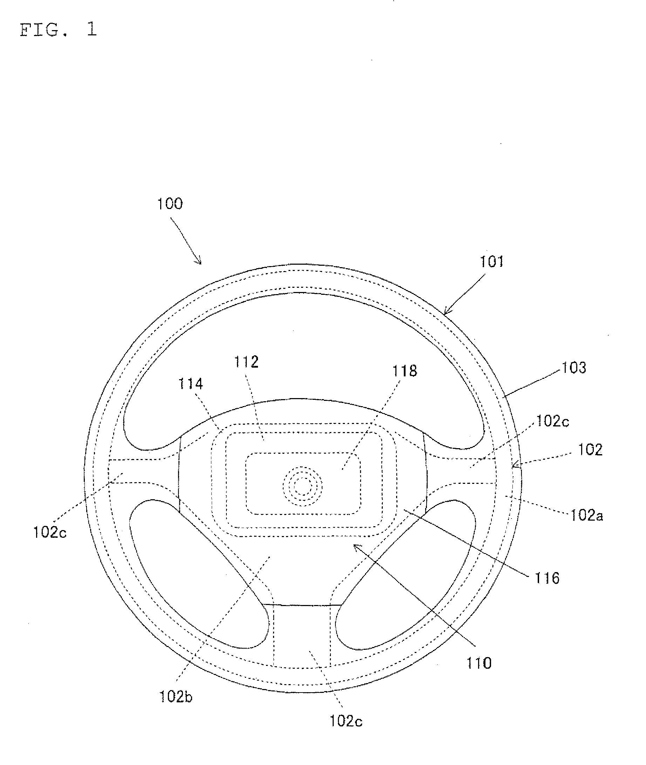

As shown in FIG. 1, the steering apparatus 100 of this embodiment includes at least a circular steering wheel 101 that a driver uses for steering a vehicle, and an airbag module 110 installed in the profile of this steering wheel 101. The steering wheel 101 referred to here corresponds to "steering wheel for steering a vehicle" in the present invention. The airbag module 110 referred to here corresponds to "airbag module" in the present invention.

The airbag module 110 includes at least an airbag 112, a retainer 114, a module cover (also called "module pad" or "airbag cover") 116, and an inflator 118. The airbag 112 is an airbag body folded into a predetermined shape and housed in the retainer 114. Before a vehicle collision, the occupant (also called "driver") side of this airbag 112 is covered by the module cover 116. During a vehicle collision, the airbag 112 is supplied with gas for development and inflation from the inflator 118, tears the module cover 116 along a tear line (not shown), and develops and inflates toward an occupant restraining region where an occupant is restrained.

The steering wheel 101 is mainly composed of a steering wheel core metal 102 and a covering portion 103. The steering wheel core metal 102 is a core metal portion forming a wheel framework of the steering wheel 101, and is provided in a core portion of the steering wheel 101, and serves as a framework portion ensuring the strength of the steering wheel 101. Therefore, the steering wheel core metal 102 referred to here can also be called "steering wheel framework" or "steering wheel core material" constituting the steering wheel 101. This steering wheel core metal 102 includes at least a circular portion 102a that is circular, a boss portion 102b, and spoke portions 102c. The circular portion 102a is circularly formed so as to define the wheel profile in the steering wheel core metal 102. The boss portion 102b is located in the central region of the steering wheel core metal 102 and is connected to a steering shaft (not shown). The spoke portions 102c connect the circular portion 102a and the boss portion 102b. FIG. 1 describes a case where the steering wheel core metal 102 has three spoke portions 102c. The steering wheel core metal 102 referred to here corresponds to "steering wheel core metal" in the present invention. The circular portion 102a, the boss portion 102b, and the spoke portions 102c referred to here correspond to "circular portion," "boss portion," and "spoke portions," respectively, in the present invention.

On the other hand, the covering portion 103 covers an upper shell portion (below-described upper shell 104) of the steering wheel core metal 102, and is made of a resin material. That is, this covering portion 103 is a resin layer at the time of resin molding of the steering wheel core metal 102. Typically, the covering portion 103 attached so as to cover the upper shell portion of the steering wheel core metal 102 is formed by injection molding of industrial resin such as polypropylene (PP) resin, acrylonitrile butadiene styrene (ABS) resin, or urethane resin. The covering portion 103 referred to here corresponds to "covering portion" in the present invention.

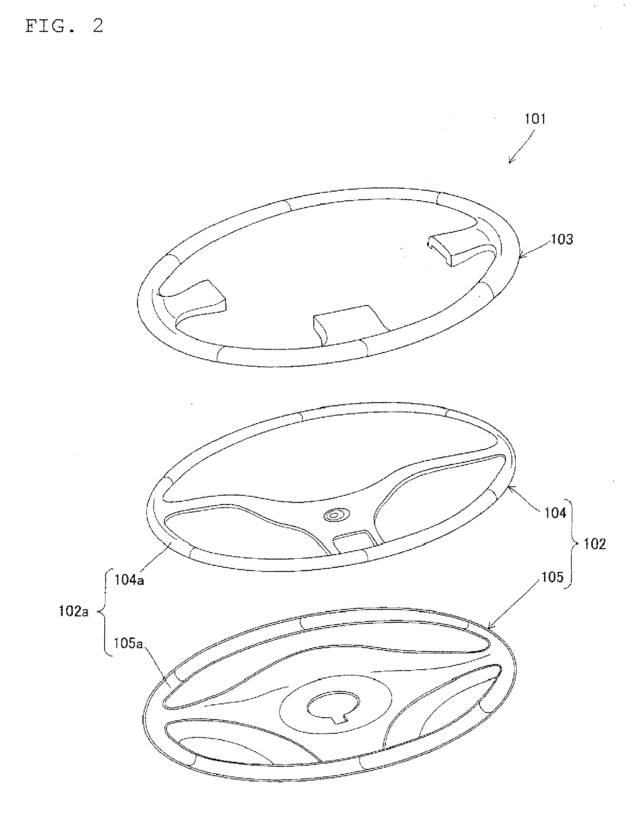

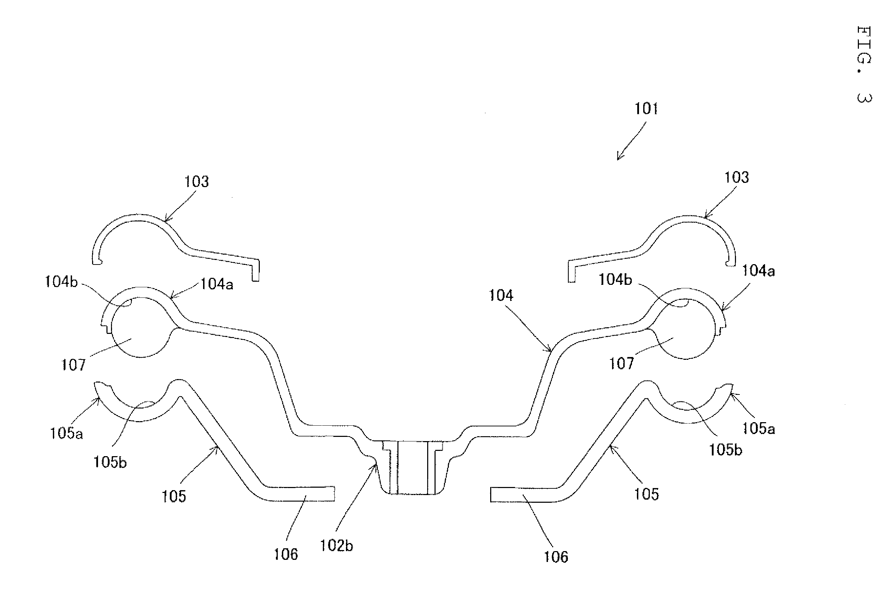

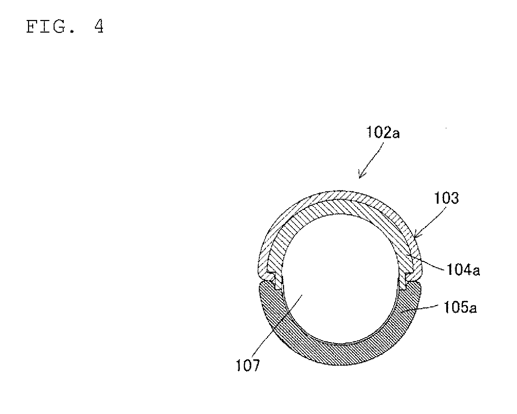

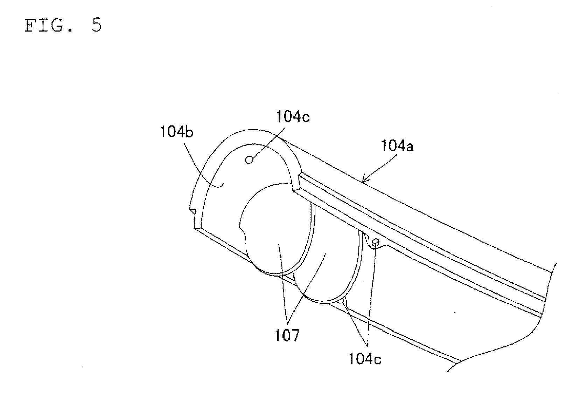

The detailed structure of the steering wheel core metal 102 of this embodiment will be described with reference to FIGS. 2 to 5. In FIG. 2 is shown an exploded perspective view of the steering wheel 101 in FIG. 1. In FIG. 3 is shown the exploded cross section structure of the steering wheel 101 in FIG. 1. In FIG. 4 is shown the cross section structure of the circular portion 102a of the steering wheel core metal 102 of this embodiment. In FIG. 5 is shown a perspective view of a first half 104a constituting the circular portion 102a in FIG. 4.

As shown in FIGS. 2 and 3, the steering wheel core metal 102 includes an upper shell 104 formed of a metal material and a lower shell 105 formed of a resin material. When the steering wheel is formed, the surface of the upper shell 104 is covered by the covering portion 103. A first half 104a made of metal is part of the upper shell 104, is circular, and has a semicircular cross section. A second half 105a made of resin is part of the lower shell 105, is circular, and has a semicircular cross section. The circular portion 102a of this steering wheel core metal 102 is formed by superimposing the first half 104a on the second half 105a so as to have a tubular cross section. The first half 104a and the second half 105a typically have a semicircular, semielliptical, substantially C-shaped, or substantially U-shaped cross section. The upper shell 104 made of metal is typically formed of a magnesium alloy or an aluminum alloy. The lower shell 105 made of resin is typically formed by injection molding of industrial resin such as polypropylene (PP) resin, acrylonitrile butadiene styrene (ABS) resin, or urethane resin. The first half 104a and the second half 105a referred to here correspond to "first half" and "second half," respectively, in the present invention. It is possible to call only the upper shell 104 formed of a metal material "steering wheel core metal."

Forming at least the lower shell 105 of a resin material can reduce the weight of the whole steering wheel core metal 102, compared to the case where both the upper shell and the lower shell are formed of a metal material. In addition, since the designed skin portion of the steering wheel 101 is divided into the covering portion 103 and the lower shell 105, the design freedom is increased, and decoration can be facilitated.

As shown in FIG. 3, the lower shell 105 is preferably an extension of the covering member 106 made of resin that covers the boss portion 102b. Such a structure enables the second half 105a to serve both as a member that constitutes the circular portion 102a and as a member that covers the undersurface of the boss portion.

As shown in FIGS. 4 and 5, in this embodiment, a plurality of extending pieces 107 made of metal that extend so as to intersect with the plane in which the steering wheel core metal 102 extends are provided in the space region defined by the first half 104a and the second half 105a. The plurality of extending pieces 107 are circular flat plates having a predetermined thickness, and the profile thereof corresponds to the inner curved surface 104b of the first half 104a and the inner curved surface 105b of the second half 105a. The locations and the number of the extending pieces 107 can be arbitrarily set in the space region defined by the first half 104a and the second half 105a. The extending pieces 107 referred to here correspond to "extending pieces" in the present invention.

The plurality of extending pieces 107 function as reinforcing ribs that reinforce the steering wheel core metal 102. Therefore, in spite of the lower shell 105 formed of a resin material, the strength of the whole steering wheel 101 can be prevented from being reduced. In addition, since the profile of the plurality of extending pieces 107 corresponds to the inner curved surfaces of the first half 104a and the second half 105a, the space region defined by the first half 104a and the second half 105a is filled by the extending pieces 107, and thereby the shape of the whole steering wheel 101 can be maintained.

The plurality of extending pieces 107 made of metal are preferably integral with the first half 104a made of metal, as shown in FIG. 4. The term "integral" referred to here includes an embodiment in which the plurality of extending pieces 107 are formed on the inner curved surface of the first half 104a when the upper shell 104 (first half 104a) is formed, and an embodiment in which the plurality of extending pieces 107 are joined to the inner curved surface of the first half 104a after the upper shell 104 (first half 104a) is formed. When the first half 104a and the plurality of extending pieces 107 are integrally molded, it is preferable to use die casting of a magnesium alloy or an aluminum alloy. Such a structure can reduce the number of components and the production cost of the steering wheel core metal 102.

The upper shell 104 (first half 104a) and the lower shell 105 (second half 105a) can be joined by screwing, friction welding, or ultrasonic welding. In the case of screwing, the first half 104a and the second half 105a can be joined by using holes or through holes such as the screw holes 104c described in FIG. 5. In this case, the covering portion 103 that covers the upper shell 104, and the lower shell 105 can be formed of different materials or into different shapes. For example, the texture and the thickness of the grip skin of the steering wheel 101 can be easily customized according to the preference of the user.

The surfaces of the covering portion 103 and the lower shell 105 can be decorated by painting in a single color or printing a pattern thereon. Alternatively, the surfaces of the covering portion 103 and the lower shell 105 can be decorated by bonding a sheet of genuine leather, synthetic leather, metal, woven cloth, fabric, resin, or rubber thereto.

As described above, according to the structure of the steering wheel core metal 102, the steering wheel 101, and the steering apparatus 100 of this embodiment, the circular portion 102a of the steering wheel core metal 102 is formed by superimposing the first half 104a made of metal on the second half 105a made of resin. The plurality of extending pieces 107 are provided in the region defined by the first half 104a and the second half 105a, and the profile of the plurality of extending pieces 107 corresponds to the inner curved surfaces of the first half 104a and the second half 105a. Since the second half 105a is made of resin, the weight can be reduced. Since the profile of the plurality of extending pieces 107 corresponds to the inner curved surfaces of the first half 104a and the second half 105a, the rigidity can be improved. Thus, the weight of the steering wheel core metal 102 can be reduced without reducing the rigidity.

The present invention is not limited to the above-described embodiment, and various applications or modifications are possible. For example, the following embodiments to which the above-described embodiment is applied are possible.

In the above-described embodiment, the lower shell 105 (second half 105a) is an extension of the covering member 106 that covers the boss portion 102b. However, if necessary, the second half 105a can be separate from the covering member 106.

In the above-described embodiment, the plurality of extending pieces 107 provided in the space region defined by the first half 104a and the second half 105a are integral with the first half 104a and are made of metal. However, in the present invention, the plurality of extending pieces 107 can be separate from the first half 104a and the second half 105a. In the present invention, instead of or in addition to the extending pieces 107, extending pieces that are integral with the second half 105a, are made of resin, and have the same shape as the extending pieces 107 can be used.

Although the above-described embodiment relates to a steering apparatus of an automobile, the present invention is a technique also applicable to steering apparatuses of other vehicles, for example, buses, taxis, ships, and trains.

## Claims

1. A steering wheel core metal forming a wheel framework of a steering wheel for steering a vehicle, the steering wheel core metal comprising:
a boss portion at which the steering wheel core metal is connected to a steering shaft;
a circular portion that is circular and has a tubular cross section; and
a spoke portion that connects the boss portion and the circular portion,
wherein the circular portion is formed by superimposing a first half made of metal that is circular and has a semicircular cross section on a second half made of resin that is circular and has a semicircular cross section,
wherein a plurality of extending pieces that extend so as to intersect with the plane in which the steering wheel core metal extends are provided in the region defined by the first half and the second half, and
wherein the profile of the plurality of extending pieces corresponds to the inner curved surfaces of the first half and the second half.

2. The steering wheel core metal according to Claim 1, wherein the first half is integral with the extending pieces.

3. A steering wheel for steering a vehicle comprising:
a steering wheel core metal forming a wheel framework of the steering wheel; and
a covering portion made of resin that covers the periphery of the steering wheel core metal,
wherein the steering wheel core metal includes a boss portion at which the steering wheel core metal is connected to a steering shaft, a circular portion that is circular and has a tubular cross section, and a spoke portion that connects the boss portion and the circular portion,
wherein the circular portion is formed by superimposing a first half made of metal that is circular and has a semicircular cross section on a second half made of resin that is circular and has a semicircular cross section,
wherein a plurality of extending pieces that extend so as to intersect with the plane in which the steering wheel core metal extends are provided in the region defined by the first half and the second half, and
wherein the profile of the plurality of extending pieces corresponds to the inner curved surfaces of the first half and the second half.

4. The steering wheel according to Claim 3, wherein the first half is integral with the extending pieces.

5. The steering wheel according to Claim 3 or 4, further comprising a covering member made of resin that covers the boss portion, and wherein the second half is an extension of the covering member toward the circular portion.

6. A steering apparatus comprising:
a steering wheel for steering a vehicle according to any one of Claims 3 to 5; and
an airbag module that is disposed in the profile of the steering wheel and that restrains an occupant of the vehicle with an airbag that develops and inflates in an occupant restraining region at the time of a vehicle collision.
